**Europäisches Patentamt**

**European Patent Office**

**Office européen des brevets**

(19)

(11) Numéro de publication : **0 348 276 B1**

(12)

# FASCICULE DE BREVET EUROPEEN

(45) Date de publication du fascicule du brevet :
**28.10.92 Bulletin 92/44**

(51) Int. Cl.⁵ : **B60N 2/46,** A47C 1/03

(21) Numéro de dépôt : **89401682.3**

(22) Date de dépôt : **15.06.89**

(54) **Accoudoir central pivotant pour siège de véhicule automobile.**

(30) Priorité : **22.06.88 FR 8808390**

(43) Date de publication de la demande :
**27.12.89 Bulletin 89/52**

(45) Mention de la délivrance du brevet :
**28.10.92 Bulletin 92/44**

(84) Etats contractants désignés :
**DE GB IT**

(56) Documents cités :
**EP-A- 0 061 967**
**DE-A- 2 932 347**
**FR-A- 2 287 193**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Germain, Gérard**
**10 avenue du 8 Mai 1945**
**F-25200 Montbeliard (FR)**

(74) Mandataire : **Bouget, Lucien et al**
**Cabinet Lavoix 2, Place d'Estienne d'Orves**
**F-75441 Paris Cédex 09 (FR)**

EP 0 348 276 B1

Jouve, 18, rue Saint-Denis, 75001 PARIS

# Description

L'invention concerne un accoudoir, notamment un accoudoir central avant à deux positions stables d'un véhicule automobile.

L'accoudoir central avant d'un véhicule automobile qui est disposé entre les deux sièges avant comporte une partie mobile d'appui constituée par une armature recouverte par une matelassure. Cette partie mobile est montée articulée sur le véhicule automobile, autour d'un axe horizontal, de façon à pouvoir se déplacer entre deux positions, à savoir une position abaissée où cette partie mobile d'appui est sensiblement horizontale et une position relevée où elle est sensiblement verticale. Dans sa position abaissée, l'accoudoir joue son rôle habituel, la mise en position relevée de l'accoudoir pouvant s'avérer nécessaire, pour pouvoir accèder à une zone située sous l'accoudoir réservée à divers usages. On peut par exemple disposer sous l'accoudoir une boîte ou case pour le rangement de divers objets pouvant servir au conducteur ou aux passagers du véhicule. On peut également disposer sous l'accoudoir une console comportant des moyens de commande de divers organes du véhicule.

Dans le cas d'un accoudoir fixe restant constamment en position sensiblement horizontale, il n'est pas possible de définir des dimensions idéales pour cet accoudoir qui permettent à la fois d'obtenir une bonne accessibilité à la zone située sous l'accoudoir et un confort satisfaisant pour le passager avant du véhicule. De plus, l'accoudoir en position fixe ne constitue pas une barrière efficace entre l'arrière et l'avant du véhicule, dans l'espace ménagé entre les deux sièges avant.

Il peut être en effet nécessaire de constituer une telle barrière entre l'arrière et l'avant du véhicule, par exemple pour empêcher le passage d'un enfant ou d'un animal de l'arrière vers l'avant du véhicule. Une telle barrière peut également éviter qu'un enfant assis sur le siège arrière du véhicule ne soit projeté à l'avant du véhicule, en cas de freinage brutal.

On a donc proposé de prévoir un moyen de verrouillage de l'accoudoir central avant en position relevée, pour que cet accoudoir puisse constituer alors une barrière efficace entre l'arrière et l'avant du véhicule.

On a proposé de réaliser le verrouillage et le déverrouillage de l'accoudoir par des moyens disposés latéralement par rapport à l'accoudoir. Cependant, de tels moyens sont peu pratiques et encombrants.

On a également proposé, dans la demande de brevet FR-A-2 617 101 (N° d'enregistrement national 87-08881), qui n'était pas encore publiée à la date de priorité de la présente demande, un accoudoir dont la partie mobile est articulée sur une chape fixée sur la carrosserie du véhicule et comportant deux montants verticaux. Un axe de verrouillage est monté avec une certaine latitude de déplacement sur la partie mobile. Cet axe de verrouillage coopère avec les montants de la chape, en particulier pour réaliser le blocage en rotation de l'accoudoir en position verticale. Le déverrouillage de l'accoudoir permettant son retour vers la position abaissée est obtenu en exerçant manuellement une traction sur l'axe de verrouillage. La partie mobile de l'accoudoir peut être déplacée entre sa position abaissée et sa position relevée de façon manuelle.

Un tel dispositif qui permet de réaliser une barrière efficace entre l'arrière et l'avant du véhicule nécessite la fixation d'une chape sur la carrosserie du véhicule, ce qui, dans certains cas, peut présenter un inconvénient.

Le but de l'invention est donc de proposer un accoudoir, notamment un accoudoir central avant d'un véhicule automobile comportant une partie mobile constituée par une armature recouverte par une matelassure montée pivotante autour d'un axe d'articulation horizontal de façon à pouvoir être déplacée entre deux positions stables, à savoir une position abaissée où la partie mobile est sensiblement horizontale et une position relevée où elle est sensiblement verticale, cet accoudoir étant d'un fonctionnement très simple et très sûr et pouvant être monté indifféremment sur la carrosserie ou sur un siège avant du véhicule.

Dans ce but, selon la partie caractérisante de la revendication indépendante 1, ledit accoudoir est caractérisé par le fait que l'axe d'articulation horizontal solidaire de la structure du véhicule porte une gâche de forme annulaire disposée coaxialement par rapport à l'axe d'articulation, présentant une surface active profilée suivant un bord annulaire, à l'une de ses extrémités frontales, autour de l'axe d'articulation, et par le fait que la partie mobile comporte un ensemble de commande constitué par un support monté coulissant sur l'armature dans la direction axiale portant un pène de forme annulaire monté coulissant sur l'axe d'articulation et présentant une surface active profilée suivant un bord annulaire susceptible de coopérer avec la surface active de la gâche pour bloquer la partie mobile en rotation dans sa position verticale et mettre cette partie mobile en butée vers le bas dans sa position horizontale et un bouton de commande accessible sur un côté latéral de l'accoudoir pour le déplacement axial du support et du pène par poussée, pour réaliser le déverrouillage de la partie mobile en position verticale, par séparation du pène et de la gâche, des moyens élastiques de rappel étant intercalés entre l'ensemble de commande et l'armature, de façon à assurer le rappel du pène vers la gâche.

Afin de bien faire comprendre l'invention, on va maintenant décrire à titre d'exemple non limitatif, en se référant aux figures jointes en annexe, un mode de réalisation d'un accoudoir central avant pour siège de véhicule, suivant l'invention.

La figure 1 est une vue partielle en perspective éclatée de l'accoudoir verrouillé en position relevée.

La figure 2 est une vue en coupe de l'accoudoir suivant 2-2 de la figure 1.

La figure 3 est une vue en coupe analogue à la figure 2, de l'accoudoir en position relevée et en début de déverrouillage.

La figure 4 est une vue partielle en perspective éclatée de l'accoudoir en position basse.

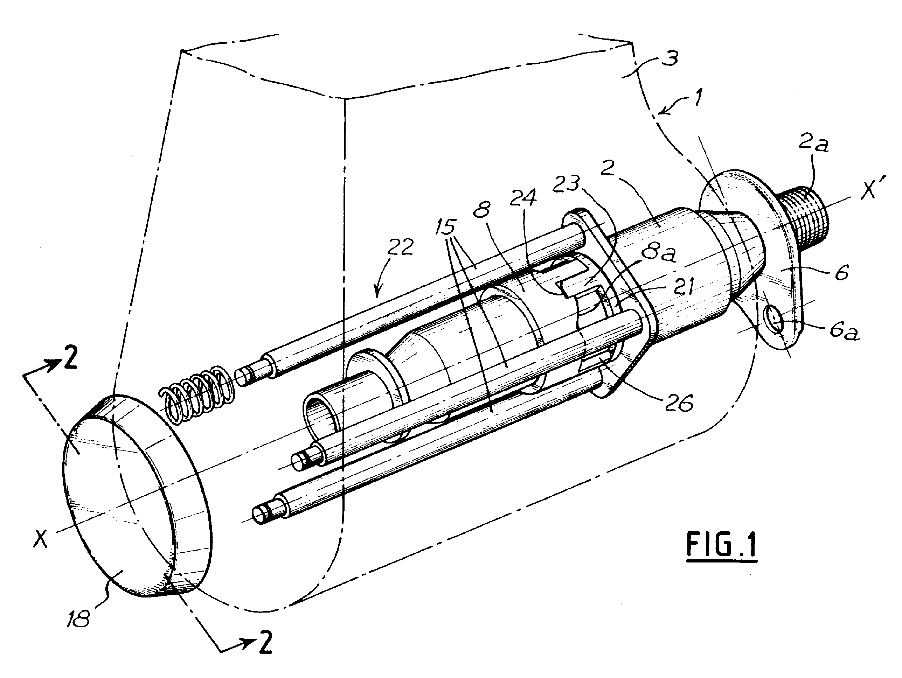

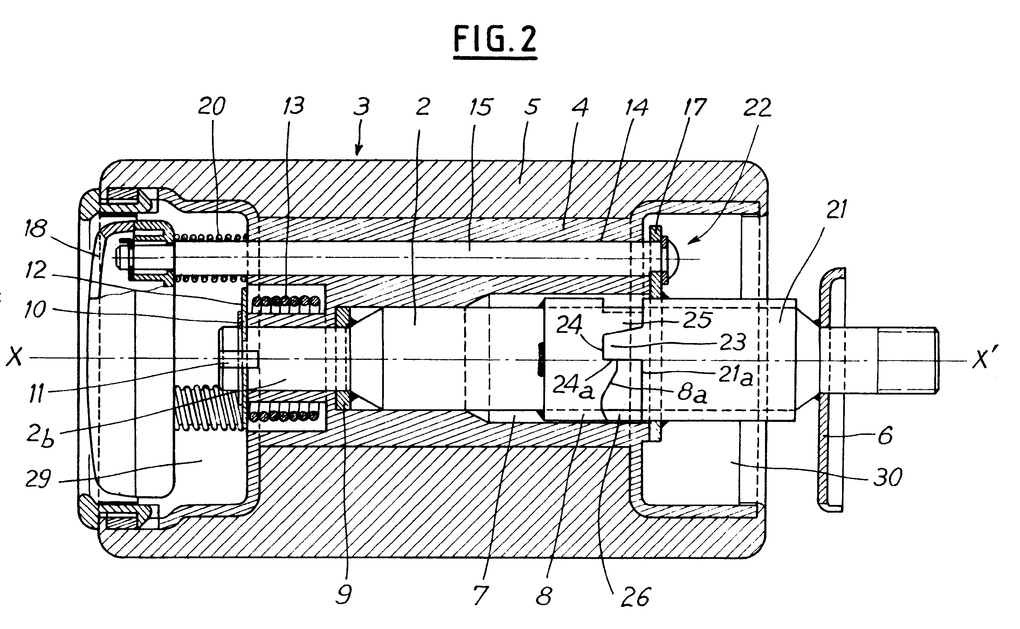

Sur les figures 1 et 2, on voit un accoudoir central avant d'un véhicule automobile désigné de manière générale par le repère 1 et comportant une partie fixe constituée par un axe d'articulation 2 et une partie mobile 3 montée pivotante sur l'axe d'articulation 2, autour de l'axe de rotation géométrique XX'.

L'axe d'articulation 2 comporte une extrémité filetée 2a et, au voisinage de cette extrémité, une platine en tôle pliée 6 percée d'un trou de fixation 6a et fixée par soudure à l'extrémité de l'axe 2.

L'axe d'articulation 2 symétrique de révolution autour de l'axe géométrique XX' est fixé sur la structure du véhicule, de façon que l'axe de rotation géométrique XX' soit horizontal.

De manière préférentielle, l'axe d'articulation 2 est fixé sur le bord droit du dossier du siège du conducteur, dans sa partie inférieure. Pour celà, un trou taraudé est prévu dans l'armature du siège, dans lequel est vissée la partie filetée 2a de l'axe d'articulation 2. L'axe 2 est ensuite bloqué en rotation et immobilisé grâce à une vis de fixation engagée dans le trou 6a de la platine 6 et vissée dans l'armature du siège du conducteur.

Comme il est visible sur la figure 2, la partie mobile 3 de l'accoudoir 1 comporte une armature rigide 4 et une matelassure souple 5 recouvrant l'armature.

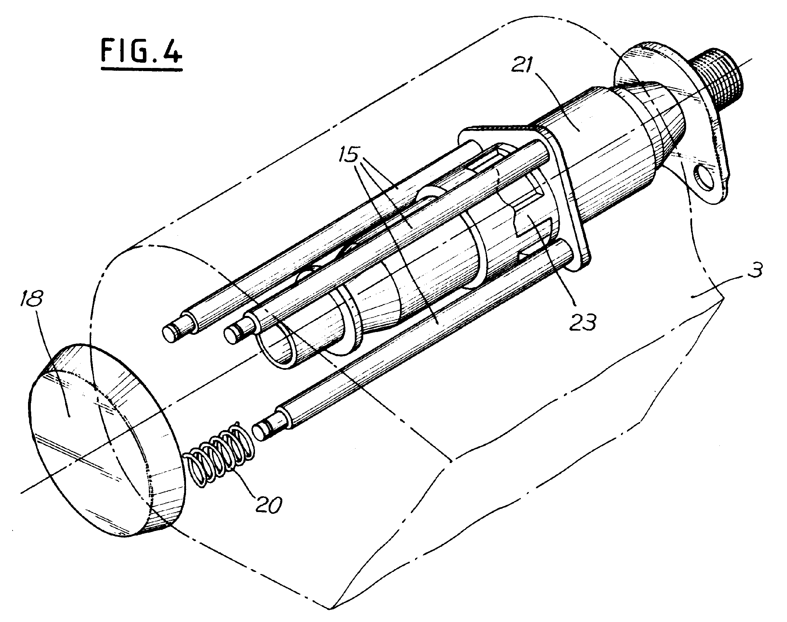

L'armature rigide 4 comporte un alésage central 7 dans lequel est monté l'axe d'articulation 2, de manière que la partie mobile 3 de l'accoudoir puisse pivoter entre une position relevée telle que représentée sur la figure 1 et une position abaissée représentée sur la figure 4.

L'axe d'articulation 2 porte une gâche 8 constituée par une pièce de forme annulaire enfilée sur l'axe 2 et immobilisée par soudage sur l'axe 2. La gâche 8 comporte une surface active profilée 8a à l'une de ses extrémités frontales, dont la forme précise sera décrite plus loin.

L'axe d'articulation 2 peut être réalisé de manière avantageuse sous forme tubulaire et réalisé, dans ce cas, par soudage de différentes pièces tubulaires les unes sur les autres. Cet axe d'articulation pourrait être également réalisé sous forme pleine par simple usinage. Dans ce cas cependant, il est préférable de constituer la gâche sous forme d'une pièce séparée rapportée par soudage sur l'axe d'articulation.

L'alésage 7 de l'armature 4 présente des parties successives dans la direction axiale dont les diamètres sont différents et qui permettent de recevoir les différentes parties de l'axe d'articulation 2.

L'axe d'articulation 2 comporte un bout d'arbre 2b à diamètre réduit à son extrémité opposée à la partie filetée 2a qui est engagée dans une partie correspondante à diamètre réduit de l'alésage 7. Une rondelle de blocage 9 est soudée sur l'axe 2 à l'extrémité intérieure du bout d'arbre 2b. Cette rondelle 9 vient en appui sur un épaulement de l'alésage 7 de l'armature 4 séparant la partie à faible diamètre de l'alésage 7 dans laquelle est engagé le bout d'arbre 2b d'une partie à plus grand diamètre dans laquelle est montée la partie centrale de l'axe d'articulation 2.

Un anneau d'arrêt ou un circlips 10 engagé sur l'extrémité extérieure du bout d'arbre 2b et venant en appui sur une rondelle 12 de plus grand diamètre elle-même en appui sur l'extrémité de l'armature 4 permet d'assurer le maintien axial de l'armature 4 et de l'ensemble mobile 3 de l'accoudoir monté sur l'axe 2.

La rondelle 12 est bloquée en rotation sur le bout d'arbre 2b par une clavette 11.

L'une des extrémités d'un ressort de rappel 13 est engagée dans une ouverture de la rondelle 12 qui permet son blocage dans une position réglée et indexée en rotation autour de l'axe XX'. L'autre extrémité du ressort de rappel 13 est fixée sur l'armature 4. L'armature 4 est montée à frottement doux sur l'axe d'articulation 2, si bien qu'elle est susceptible de pivoter autour de l'axe XX'. Le ressort 13 assure le rappel de la partie mobile 3 de l'accoudoir dans une position qui correspond à la position horizontale abaissée de cet accoudoir comme il sera expliqué plus loin.

L'alésage 7 de l'armature 4 comporte une partie à grand diamètre dans laquelle est engagée la gâche 8, avec un certain jeu radial.

L'armature 4 comporte, dans la direction de l'axe XX', c'est-à-dire suivant la largeur de l'accoudoir, des trous cylindriques rectilignes tels que le trou 14 représenté sur la figure 2, traversant l'armature 4 de part en part.

Dans chacun des trous 14 est engagée de manière coulissante une tige 15 dont les extrémités sont saillantes par rapport au trou 14.

Sur la figure 1, on voit que trois tiges 15 parallèles à l'axe XX' sont disposées sensiblement à 120° autour de l'axe XX' et reliées à l'une de leurs extrémités à une platine 17 de manière à constituer un ensemble monté coulissant sur l'armature 4, dans la direction XX'. A cet effet, chacune des tiges 15 est engagée dans un trou 14 correspondant traversant l'armature 4 dans la direction transversale.

Les extrémités des tiges 15 reliées à la platine 17 sont engagées dans des trous traversant cette platine et mises en butée et bloquées par une vis et une rondelle.

L'extrémité des tiges 15 opposée à l'extrémité fixée sur la platine 17 sont reliées à un bouton de commande 18 en matière plastique qui est clippé sur l'extrémité des tiges. Un ressort de rappel 20 est engagé sur l'extrémité de chacune des tiges 15 avant le clippage du bouton 18, de manière que ces ressorts 20 soient intercalés entre l'armature 4 et le bouton 18.

La platine 17 comporte une ouverture centrale d'axe XX' dans laquelle est fixé par soudage un pène 21 de forme annulaire enfilé sur l'axe d'articulation 2 et monté coulissant sur cet axe.

L'ensemble 22 constitué par les tiges 15, la platine 17 et le bouton 18 constitue un ensemble de commande du pène 21 susceptible de se déplacer dans la direction axiale par rapport à l'armature 4, lorsqu'une poussée est exercée sur le bouton 18. Le pène 21 subit alors un déplacement axial de la gauche vers la droite.

Les ressorts 20 sont comprimés et assurent le rappel de l'ensemble de commande 22 dans sa position représentée sur la figure 2, lorsqu'on relâche la pression sur le bouton 18.

Le pène 21 comporte une surface active annulaire 21a à son extrémité frontale dirigée vers l'intérieur de l'accoudoir, c'est-à-dire vers la surface active 8a de la gâche 8.

L'extrémité frontale active du pène 21 comporte deux doigts de blocage en saillie axiale disposés sensiblement à 180° sur le pène 21. Ces doigts de blocage tels que le doigt 23 représenté sur la figure 2 comportent chacun une surface d'engagement latérale sensiblement inclinée par rapport à la direction axiale et une surface latérale de blocage sensiblement parallèle à l'axe XX'.

La surface d'actionnement 8a de la gâche 8 dont une moitié est visible sur les figures 1 et 2 comporte une encoche 24 légèrement rentrante vers l'intérieur, d'une forme correspondant à la forme du doigt 23 du pène 21 et délimitée d'un côté par une partie 25 en saillie axiale de la gâche 8. La gâche 8 comporte deux encoches 24 situées à 180° l'une de l'autre et donc deux parties saillantes 25 à 180°, si l'on considère une rotation autour de l'axe XX'.

Chacune des parties en saillie 25 définit, par l'un de ses côtés latéraux inclinés par rapport à l'axe XX', le bord de l'encoche 24 permettant l'engagement du doigt 23 et, par son autre côté parallèle à l'axe XX', une butée 26.

L'encoche 24 est délimitée, à l'opposé de la partie saillante 25, par un rebord 24a parallèle à l'axe XX' de faible longueur. Entre le bord 24a et la butée 26, la surface active 8a de la gâche constitue une rampe d'abord dirigée vers l'intérieur de l'accoudoir, puis vers l'extérieur, c'est-à-dire dans une direction correspondant à un déplacement vers la droite de l'ensemble de commande 22 et à une compression des ressorts 20, lorsque le doigt 23 du pène 21 coopère avec cette rampe.

La gâche 8 comporte une seconde rampe semblable disposée à 180° avec laquelle le second doigt 23 du pène 21 est susceptible de coopérer.

Comme il est visible sur la figure 2, l'armature 4 comporte deux extrémités latérales définissant deux cavités 29 et 30 ouvertes vers l'extérieur de l'accoudoir.

Les parties de l'ensemble de commande 22 situées à l'extérieur des ouvertures 14 traversant l'armature 4 sont disposées dans les cavités 29 et 30. Le bouton de commande 18, les extrémités des tiges 15 fixées dans le bouchon 18 et les ressorts 20 sont disposés dans la cavité 29, de telle façon que le bouton 18 soit facilement accessible de l'extérieur pour sa manoeuvre par poussée, depuis le siège avant du passager.

La platine 17 et les extrémités des tiges 15 correspondantes ainsi que le pène 21 sont engagées dans la cavité 30 située du côté du siège du conducteur sur lequel est fixé l'axe d'articulation 22 de l'accoudoir. Les cavités 29 et 30 permettent un débattement suffisant de l'ensemble 22 pour assurer la commande de l'accoudoir.

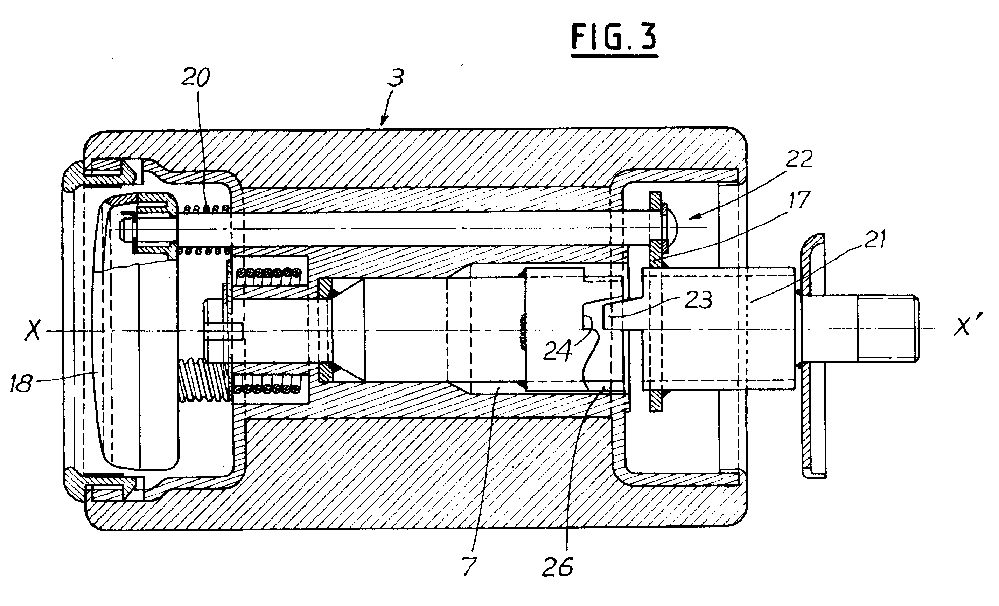

Sur les figures 3 et 4, l'accoudoir a été représenté dans des configurations ou positions différentes de celles représentées sur les figures 1 et 2. Les éléments correspondants sur les figures 1 et 2 d'une part et 3 et 4 d'autre part portent les mêmes repères.

Sur les figures 1 et 2 l'accoudoir a été représenté dans sa position relevée, l'ensemble mobile 3 étant dans une position pratiquement verticale.

L'accoudoir est verrouillé dans cette position par engagement des doigts 23 du pène 21 dans les encoches 24 de la gâche 8, sous l'effet des ressorts 20 qui assurent le rappel de l'ensemble 22 dans sa position située vers la gauche et du pène 21 solidaire de cet ensemble 22, dans sa position d'engagement avec la gâche 8.

L'accoudoir constitue alors une barrière entre l'arrière et l'avant du véhicule.

Pour rabattre l'accoudoir dans sa position abaissée sensiblement horizontale représentée sur la figure 4, on actionne l'ensemble de commande 22 en exerçant une poussée sur le bouton 18, comme représenté sur la figure 3. Cette poussée produit une compression des ressorts 20 et un déplacement de l'ensemble 22 et du pène 21 vers la droite, de sorte que les doigts 23 s'éloignent du fond des encoches 24, comme représenté sur la figure 3. L'extrémité du doigt 23 vient dans une position située au-delà du rebord 24a, si bien que la partie mobile 3 de l'accoudoir est libre en rotation autour de l'axe XX'. Le ressort de rappel 13 commence à entraîner la partie mobile 3 de l'accoudoir vers le bas et la pression sur le bouton 18 est relâchée. L'ensemble 22 se déplace vers la gauche, si bien que l'extrémité du doigt 23 vient en contact avec la rampe de la partie active 8a de la gâche. La descente de l'accoudoir se poursuit sans difficulté, puisque la rampe est dirigée vers l'intérieur de l'accoudoir, c'est-à-dire dans un sens correspondant à la détente des ressorts 20 précédemment comprimés.

La partie terminale de la rampe de la surface active 8a est dirigée dans l'autre sens, c'est-à-dire dans un sens produisant un déplacement du pène 21 et de l'ensemble de commande 22 provoquant une compression des ressorts 20. Il en résulte un freinage et un ralentissement de l'accoudoir avant que la surface d'appui du doigt 23 vienne en butée sur la surface d'appui 26 du doigt 25 de la gâche. L'accoudoir est donc immobilisé par la surface de butée 26, après un ralentissement en fin de course. Dans cette position, l'accoudoir est sensiblement horizontal comme représenté sur la figure 4.

Dans cette position le pène 21 et le doigt 23 sont rappelés vers la gauche par les ressorts 20, si bien que l'extrémité du doigt 23 est en contact avec la partie inférieure de la rampe de la surface 8a.

Pour effectuer le relèvement de l'accoudoir, à partir de cette position horizontale, il suffit de soulever sa partie d'extrémité opposée à l'axe d'articulation 2. Les doigts 23 du pène 21 restent en contact avec les rampes correspondantes de la surface 8a pendant la rotation de la partie mobile 3 et de l'ensemble de commande 22 autour de l'axe XX'.

En fin de mouvement la surface latérale inclinée du doigt 23 vient en contact avec la surface inclinée correspondante délimitant l'encoche 24 de la gâche. Le mouvement de pivotement ne peut se poursuivre et le doigt 23 est guidé à l'intérieur de l'encoche 24 dans laquelle il vient s'engager. Le pène 21 réalise alors l'immobilisation de la partie 3 de l'accoudoir.

Les pièces sont revenues dans leur position représentée sur les figures 1 et 2.

Pendant le pivotement, la seconde partie de la rampe de la surface active 8a dirigée vers l'extérieur de l'accoudoir provoque un déplacement du pène 21 et de l'ensemble 22 vers la droite et donc une compression des ressorts 20. Les ressorts 20 comprimés assurent l'engagement du doigt 23 dans l'encoche 24, lorsque l'accoudoir est parvenu dans sa position relevée.

Le déplacement par pivotement de l'accoudoir entre sa position horizontale abaissée et sa position relevée permet également de bander le ressort 13 de rappel de la partie mobile 3 de l'accoudoir en position abaissée.

Le débattement angulaire de la partie mobile de l'accoudoir correspondant à l'angle de déplacement en rotation du doigt 23 du pène 21 entre la cavité 24 et la butée 26 est égal à 116°, dans l'exemple de réalisation qui a été décrit. En partant d'une position pratiquement horizontale de l'accoudoir, on parvient donc à une position relevée de cet accoudoir où celui-ci est légèrement incliné vers l'arrière.

L'accoudoir suivant l'invention est donc d'un fonctionnement très simple et très sûr, son maintien en position relevée étant assuré par un blocage positif d'un doigt dans une encoche et son maintien en position abaissée par appui sur une butée basse. De plus, le déverrouillage de l'accoudoir en position relevée est obtenu de manière très simple par poussée sur un bouton facilement accessible, le déplacement vers le bas de l'accoudoir étant ensuite assuré de manière automatique par un moyen de rappel.

En outre, l'accoudoir suivant l'invention ne comporte pas de partie saillante vers l'extérieur et peut être fixé indifféremment sur un siège ou sur une autre partie de la structure du véhicule.

L'accoudoir se trouve d'autre part verrouillé de façon totalement automatique, lorsqu'il parvient en position haute.

L'invention ne se limite pas au mode de réalisation qui a été décrit.

C'est ainsi que le support de l'ensemble de commande peut être constitué par un nombre de tiges parallèles différent de trois ou sous toute autre forme. Dans le cas où il est constitué par des tiges montées coulissante dans l'armature de la partie mobile de l'accoudoir, il est nécessaire de prévoir au moins deux tiges pour obtenir un guidage efficace. On peut envisager des surfaces d'actionnement de la gâche et du pène ayant une forme différente de celle qui a été décrite.

On peut également imaginer d'autres modes de réalisation de l'ensemble de commande et d'autres moyens de rappel élastiques de cet ensemble de commande et de la partie mobile de l'accoudoir.

On pourrait également imaginer un dispositif simplifié ne comportant pas de ressort de rappel de l'accoudoir en position abaissée. Après son déverrouillage, l'accoudoir devrait être abaissé manuellement dans ce cas. On pourrait également imaginer un ressort de rappel de l'accoudoir vers sa position relevée et non plus vers sa position abaissée.

L'invention s'applique préférentiellement à l'équipement de tout véhicule automobile mais elle pourrait s'appliquer également à l'équipement d'autres moyens de transports terrestres, maritimes, aériens et même, de façon plus générale, à tout siège muni d'un accoudoir.

**Revendications**

1.- Accoudoir, notamment accoudoir central avant d'un véhicule automobile comportant une partie mobile (3) constituée par une armature (4) recouverte par une matelassure (5) montée pivotante autour d'un axe d'articulation (2) horizontal de façon à pouvoir être déplacée entre deux positions stables, à savoir une position abaissée où la partie mobile est sensiblement horizontale et une position relevée où elle est sensiblement verticale, caractérisé par le fait que l'axe d'articulation horizontal (2) solidaire de la structure du véhicule porte une gâche (8) de forme annulaire disposée coaxialement par rapport à l'axe d'articulation (2) présentant une surface active profilée (8a) suivant un bord annulaire à l'une de ses extrémités frontales, autour de l'axe d'articulation (2) et par le fait que la partie mobile (3) comporte un ensemble de commande (22) constitué par:

- un support (15) monté coulissant sur l'armature (4) dans la direction axiale XX' portant un pène (21) de forme annulaire monté coulissant sur l'axe d'articulation (2) et présentant une surface active profilée suivant un bord annulaire susceptible de coopérer avec la surface active (8a) de la gâche (8) pour bloquer la partie mobile en rotation (3) dans sa position verticale et mettre cette partie mobile en butée vers le bas dans sa position horizontale, et

- un bouton de commande (18) accessible sur un côté latéral de l'accoudoir (1) pour le déplacement axial du support (15) et du pène (21) par poussée pour réaliser le déverrouillage de la partie mobile (3) en position verticale, par séparation du pène (21) et de la gâche (8),

- des moyens élastiques de rappel (20) étant intercalés entre l'ensemble de commande (22) et l'armature (4), de façon à assurer le rappel du pène (21) vers la gâche (8).

2.- Accoudoir suivant la revendication 1, caractérisé par le fait que le support (15) de l'ensemble de commande (22) est constitué par au moins deux tiges parallèles de direction axiale solidaire à l'une de leurs extrémités du pène (21) et à leur autre extrémité du bouton de commande (18).

3.- Accoudoir suivant l'une quelconque des revendications 1 et 2, caractérisé par le fait qu'il comporte de plus un moyen de rappel élastique (13) assurant le rappel de la partie mobile (3) de sa position relevée vers sa position abaissée.

4.- Accoudoir suivant l'une quelconque des revendications 1, 2 et 3, caractérisé par le fait que la surface active du pène (21) est constituée par la surface périphérique d'au moins un doigt (23) en saillie axiale sur une des faces frontales du pène (21) et que la surface active (8a) correspondante de la gâche (8) comporte au moins une encoche (24) dont la forme correspond à celle du doigt (23) en retrait dans la direction axiale par rapport à la surface frontale de la gâche (8), une surface d'appui constituant une butée (26) pour le doigt (23) sensiblement parallèle à la direction axiale XX' et une rampe joignant l'encoche (24) à la surface d'appui (26).

5.- Accoudoir suivant la revendication 4, caractérisé par le fait que l'encoche (24) est délimitée au moins partiellement par une partie de la surface périphérique d'un doigt (25) en saillie axiale par rapport à la face frontale de la gâche (8), une partie de la surface périphérique du doigt (25) constituant la surface d'appui (26).

6.- Accoudoir suivant la revendication 4, caractérisé par le fait que la rampe joignant l'encoche (24) à la surface d'appui (26) comporte une partie terminale, au voisinage de la surface d'appui (26), dirigée de manière que, lorsque le pène (21) se déplace en contact avec cette partie de la rampe en direction de la surface d'appui, pendant le déplacement en rotation de la partie mobile (3), l'ensemble de commande (22) soit déplacé dans la direction axiale à l'encontre des moyens de rappel élastiques (20).

7.- Accoudoir suivant l'une quelconque des revendications 4, 5 et 6, caractérisé par le fait que le pène (21) comporte deux doigts (23) disposés sensiblement à 180° autour de son axe et que la surface active (8a) de la gâche (8) comporte deux encoches (24) et deux surfaces d'appui et de butée (26) disposées sensiblement à 180° autour de l'axe géométrique XX' de l'axe d'articulation (2).

8.- Accoudoir suivant l'une quelconque des revendications 1 à 7, caractérisé par le fait que le support de l'ensemble de commande (22) est constitué par trois tiges (15) disposées sensiblement à 120° autour de l'axe de rotation XX' de l'accoudoir reliées à l'une de leurs extrémités à une platine (17) comportant une ouverture centrale dans laquelle est fixé le pène (21) et engagées et clippées par leurs autres extrémités dans des logements du bouton (18), des ressorts hélicoïdaux (20) étant disposés autour des tiges et intercalés entre le bouchon (18) et une surface d'appui de l'armature (4).

9.- Accoudoir suivant l'une quelconque des revendications 1 à 8, caractérisé par le fait que le bouton de commande (18) et les extrémités correspondantes des tiges (15) sont disposés à l'intérieur d'une cavité (29) ménagée latéralement dans l'armature (4) de l'accoudoir.

10.- Accoudoir suivant l'une quelconque des revendications 1 à 8, caractérisé par le fait que l'axe d'articulation (2) est réalisé sous forme tubulaire.

11.- Accoudoir suivant l'une quelconque des revendications 1 à 10, constituant un accoudoir central avant d'un véhicule automobile disposé entre le siège du conducteur et le siège du passager avant, caractérisé par le fait que l'axe d'articulation (2) est fixé sur la partie inférieure du bord du dossier du siège du conducteur.

**Patentansprüche**

1. Armlehne, insbesondere vordere Mittelarmlehne für ein Kraftfahrzeug, mit einem beweglichen Teil (3), bestehend aus einer Armatur (4), die von einer Polsterung (5) umkleidet und gelenkig auf einer waagrechten Schwenkachse (2) montiert ist, derart, daß sie zwischen zwei stabilen Positionen verstellt werden kann, nämlich einer abgesenkten Position, in der der bewegliche Teil im wesentlichen waagrecht liegt, und einer hochgestellten Position, die im wesentlichen senkrecht verläuft,

**dadurch gekennzeichnet,**

daß die fest mit dem Aufbau des Fahrzeuges verbundene waagrechte Schwenkachse (2) eine ringförmige Raste (8) trägt, die koaxial zur Schwenkachse (2) angeordnet ist und eine profilierte aktive Oberfläche (8a) entlang einer ringförmigen Kante an einem ihrer stirnseitigen Enden und um die Schwenkachse (2) verlaufend aufweist, und daß der bewegliche Teil (3) eine Betätigungseinheit (22) aufweist, bestehend aus:

- einem Träger (15), der auf der Armatur (4) in axialer Richtung (XX') gleitend montiert ist und einen ringförmigen Riegel (21) trägt, der gleitend auf der Schwenkachse (2) montiert ist und eine profilierte aktive Oberfläche entlang einer ringförmigen Kante besitzt, die mit der aktiven Oberfläche (8a) der Raste (8) zusammenwirkt, um den beweglichen Teil (3) gegen Drehung in seiner senkrechten Position zu blockieren und denselben in seiner waagrechten Position nach unten hin zum Anschlag zu bringen; und

- einen Betätigungsknopf (18), der an einer Seite der Armlehne (1) zur axialen Verschiebung des Trägers (15) und des Riegels (21) durch Drücken zugänglich ist, um die Entriegelung des in der senkrechten Position stehenden beweglichen Teils (3) durch Trennen von Riegel (21) und Raste (8) herbeizuführen,

- wobei elastische Rückholmittel zwischen die Betätigungseinheit (22) und die Armatur (4) eingefügt sind, derart, daß die Rückführung des Riegels (21) zur Raste (8) hin bewirkt wird.

2. Armlehne nach Anspruch 1, dadurch gekennzeichnet, daß der Träger (15) der Betätigungseinheit (22) aus mindestens zwei parallelen und in Achsrichtung verlaufenden Stangen besteht, die mit einem ihrer Enden am Riegel (21), und mit ihrem anderen Ende am Betätigungsknopf (18) fest verbunden sind.

3. Armlehne nach Anspruch 1 oder 2, dadurch gekennzeichnet, daß sie weiter ein elastisches Rückholmittel (13) aufweist, das die Rückführung des beweglichen Teils (3) aus der hochstehenden Position in die abgesenkte Position bewirkt.

4. Armlehne nach einem beliebigen Anspruch 1 bis 3, dadurch gekennzeichnet, daß die aktive Oberfläche des Riegels (21) aus der peripheren Oberfläche mindenstens eines Zapfens (23) besteht, der axial über eine der Stirnflächen des Riegels (21) vorspringt, und daß die entsprechende aktive Oberfläche (8a) der Raste (8) mindestens einen Ausschnitt (24) aufweist, dessen Form derjenigen des Zapfens (23) in der in Axialrichtung relativ zur Stirnoberfläche der Raste (8) zurückgezogenen Position entspricht, wobei eine Abstützoberfläche einen Anschlag (26) für den Zapfen (23) im wesentlichen parallel in der Axialrichtung XX' sowie eine den Ausschnitt (24) an der Abstützoberfläche (26) anbindende Rampe aufweist.

5. Armlehne, nach Anspruch 4, dadurch gekennzeichnet, daß der Ausschnitt (24) mindestens teilweise durch einen Abschnitt der peripheren Oberfläche eines Zapfens (25) begrenzt ist, der axial relativ zur Stirnfläche der Raste (8) vorspringt, wobei ein Abschnitt der peripheren Oberfläche des Zapfens (25) die Abstützoberfläche (26) bildet.

6. Armlehne nach Anspruch 4, dadurch gekennzeichnet, daß die den Ausschnitt (24) an der Abstützoberfläche (26) anbindende Rampe in der Nähe der Abstützoberfläche (26) einen Endabschnitt aufweist, der so gerichtet ist, daß wenn sich der in Kontakt mit diesem Abschnitt der Rampe stehende Riegel (21) während der Drehverschiebung des beweglichen Teils (3) in Richtung der Abstützoberfläche bewegt, die Betätigungseinheit (22) in axialer Richtung gegen die Wirkung der elastischen Rückholmittel (20) verschoben wird.

7. Armlehne nach einem beliebigen Anspruch 4 bis 6, dadurch gekennzeichnet, daß der Riegel (21) zwei Zapfen (23) aufweist, die im wesentlichen um 180° um dessen Achse versetzt sind, und daß die aktive Oberfläche (8a) der Raste (8) zwei Ausschnitte (24) und zwei Abstütz- und Anschlagsoberflächen (26) aufweist, die im wesentlichen jeweils um 180° um die geometrische Achse (XX') der Schwenkachse (2) verteilt sind.

8. Armlehne nach einem beliebigen Anspruch 1 bis 7, dadurch gekennzeichnet, daß der Träger der Betätigungseinheit (22) aus drei Stangen (15) besteht, die im wesentlichen um 120° versetzt um die Drehachse (XX') der Armlehne verteilt und mit einem ihrer Enden an einer Platte (17) befestigt sind, die eine zentrale Öffnung besitzt, in der der Riegel befestigt ist, und daß die Stangen mit ihrem anderen Ende in Hohlräume des Knopfes (18) eingreifen und dort arretiert sind, wobei Schraubenfedern (20) um die Stangen herum angeordnet und zwischen dem Knopf (18) und einer Abstützoberfläche der Armatur (4) eingefügt sind.

9. Armlehne nach einem beliebigen Anspruch 1 bis 8, dadurch gekennzeichnet, daß der Betätigungsknopf (18) und die entsprechenden Enden der Stangen (15) im Inneren eines Hohlraumes (29) angeordnet sind, der seitlich in der Armatur (4) der Armlehne angebracht ist.

10. Armlehne nach einem beliebigen Anspruch 1 bis 8, dadurch gekennzeichnet, daß die Schwenkachse (2) rohrförmig ausgebildet ist.

11. Armlehne nach einem beliebigen Anspruch 1 bis 10, bestehend aus einer vorderen, zwischen dem Sitz des Fahrers und dem Sitz des vorderen Passagiers angeordneten vorderen mittleren Armlehne, dadurch gekennzeichnet, daß die Schwenkachse (2) am unteren Teil der Kante des Rückenteils des Sitzes des Fahrers befestigt ist.

**Claims**

1. Armrest, in particular the front central armrest of a motor vehicle comprising a movable part (3), constituted by a frame (4) covered by a padding (5) mounted pivoting about a horizontal articulation shaft (2) so as to be capable of being displaced between two stable positions, namely a lowered position where the movable part is approximately horizontal and a raised position where it is approximately vertical, characterised in that the horizontal articulation shaft (2) rigidly attached to the structure of the vehicle bears a keeper (8) of annular shape disposed coaxially with respect to the articulation shaft (2) presenting a profiled active surface (8a) along an annular edge at one of its frontal ends, around the articulation shaft (2) and in that the movable part (3) comprises a control assembly (22) constituted by;
   - a support (15) slideably mounted on the frame (4) in the axial direction XX' bearing a bolt (21) of annular shape slideably mounted on the articulation shaft (2) and presenting a profiled active surface along an annular edge capable of interacting with the active surface (8a) of the keeper (8) so as to block the part (3), movable in rotation, in its vertical position and so as to stop this movable part downwards in its horizontal position, and
   - a control knob (18) accessible on one lateral side of the armrest (1) for the axial displacement of the support (15) and of the bolt (21) by pushing so as to produce the unlocking of the movable part (3) in vertical position, by separation of the bolt (21) and of the keeper (8).
resilient return means (20) being interposed between the control assembly (22) and the frame (4), so as to ensure the return of the bolt (21) towards the keeper (8).

2. Armrest according to Claim 1, characterised in that the support (15) of the control assembly (22) is constituted by at least two parallel rods of axial direction rigidly attached at one of their ends to the bolt (21) and at their other end to the control knob (18).

3. Armrest according to either of Claims 1 and 2, characterised in that it further comprises a resilient return means (13) ensuring the return of the movable part (3) from its raised position to its lowered position.

4. Armrest according to any one of Claims 1, 2 and 3, characterised in that the active surface of the bolt (21) is constituted by the peripheral surface of at least one finger (23) projecting axially on one of the frontal faces of the bolt (21) and in that the corresponding active surface (8a) of the keeper (8) comprises at least one notch (24) whose shape corresponds to that of the finger (23) recessed in the axial direction with respect to the frontal surface of the keeper (8), a bearing surface constituting a stop (26) for the finger (23) approximately parallel to the axial direction XX' and a ramp joining the notch (24) to the bearing surface (26).

5. Armrest according to Claim 4, characterised in that the notch (24) is delimited at least partially by part of the peripheral surface of a finger (25) projecting axially with respect to the frontal face of the keeper (8), part of the peripheral surface of the finger (25) constituting the bearing surface (26).

6. Armrest according to Claim 4, characterised in that the ramp joining the notch (24) to the bearing surface (26) comprises a terminal part, in the vicinity of the bearing surface (26), directed so that, when the bolt (21) moves into contact with this part of the ramp in the direction of the bearing surface, during the displacement in rotation of the movable part (3), the control assembly (22) is displaced in the axial direction against resilient return means (20).

7. Armrest according to any one of Claims 4, 5 and 6, characterised in that the bolt (21) comprises two fingers (23) disposed at approximately 180° around its shaft and in that the active surface (8a) of the keeper (8) comprises two notches (24) and two bearing and stopping surfaces (26) disposed at approximately 180° about the geometrical axis XX' of the articulation shaft (2).

8. Armrest according to any one of Claims 1 to 7, characterised in that the support of the control assembly (22) is constituted by three rods (15) disposed at approximately 120° about the axis of rotation XX′ of the armrest, connected at one of their ends to a plate (17) comprising a central aperture in which is fixed the bolt (21), and engaged and clipped by their other ends into recesses of the knob (18), helical springs (20) being disposed around the rods and interposed between the knob (18) and a bearing surface of the frame (4).

9. Armrest according to any one of Claims 1 to 8, characterised in that the control knob (18) and the corresponding ends of the rods (15) are disposed inside a cavity (29) made laterally in the frame (4) of the armrest.

10. Armrest according to any one of Claims 1 to 8, characterised in that the articulation shaft (2) is constructed in tubular form.

11. Armrest according to any one of Claims 1 to 10, constituting the front central armrest of a motor vehicle disposed between the driver's seat and the front passenger's seat, characterised in that the articulation shaft (2) is mounted on the lower part of the edge of the back of the driver's seat.

FIG.1

**FIG.2**

# FIG. 3

EP 0 348 276 B1

FIG.4

EP 0 348 276 B1